# EUROPEAN PATENT APPLICATION

(11) **EP 2 610 820 A2**
(43) Date of publication of application: **03.07.2013**
(21) Application number: 12196925.7
(22) Date of filing: 13.12.2012
(51) Int. Cl.: G07C 9/00

(54) **Authentication apparatus, authentication program, and method of authentication**

(30) Priority: 28.12.2011 JP 2011287113
(71) Applicant: Fujitsu Frontech Limited, Inagi-shi, Tokyo 206-8555 (JP)
(72) Inventor: Yabuki, Maki, Tokyo, 206-8555 (JP)
(74) Representative: HOFFMANN EITLE

(57) **Abstract**

An authentication apparatus verifies biometric information acquired from a person to be authenticated against registered information registered in advance. A biometric information acquisition unit acquires biometric information from the person to be authenticated. A determination unit determines whether or not the person to be authenticated has uncertainty of verification. An information generation unit generates first generated information from the biometric information, and generates second generated information from the biometric information, which is used for verification in addition to the first generated information when the determination unit determines that the person to be authenticated has uncertainty of verification. A verification target selection unit selects whether to set first registration information as a verification target or second registration information as a verification target in addition to the first registration information. A verification unit verifies the registration information selected as the verification target against corresponding generated information.

## Description

### FIELD

The embodiments discussed herein are related to an authentication apparatus, an authentication program, and an authentication method.

### BACKGROUND

A human body includes biometric information items which make it possible to identify an individual, and some of the biometric information items are used as information for identifying and authenticating the individual. For example, it is known that the biometric information items which are considered to be capable of being used for authentication include fingerprints, eye retinas and irises, a face, vessels, DNA (Deoxyribonucleic Acid), and so forth.

In recent years, with the development of a biometric authentication technique, there have been provided various types of apparatuses for authenticating an individual by recognizing biometric features of part of a human body. In this biometric authentication, the authentication of an individual is performed by comparing biometric information (registered template) acquired during registration thereof and biometric information acquired during authentication. Further improvement of the accuracy of individual authentication using biometric information is demanded with the aim to improve usability of the biometric authentication apparatuses.

Well-known factors which reduce the accuracy of authentication using biometric information include changes in a living body due to aging, changes in the surrounding environment, such as changes in outside light, and an inappropriate operation by a person to be authenticated, such as a change in a posture of a body part from which biometric information is to be acquired. As to these factors, it has been proposed to improve the accuracy of authentication by regularly updating registered information, requesting a retry of operation when inappropriate information has been acquired, and providing a guide so as to make it possible to acquire correct information. Further, there has been proposed a biometric authentication system that improves the success ratio of authentication by performing verification using a plurality of registered data items, such as a fingerprint and a face, or a plurality of faces acquired under different conditions.

Japanese Laid-Open Patent Publication No. 2011-154415

Japanese Laid-Open Patent Publication No. 2006-85268

Japanese Laid-Open Patent Publication No. 2004-355088

However, there are some users having unstable biometric information to be acquired, which causes a problem specific to such users. Depending on a body part for acquisition of biometric information, stable information is sometimes not necessarily acquired due to temperature, humidity, and sunlight of a surrounding environment, or physical conditions of a user, and depending on the user, a range of variation in biometric information is sometimes beyond an authenticable range.

As for such a user, even if the surrounding environment is properly arranged and the user is familiarized with the operation for authentication, the accuracy of authentication is not sufficiently improved, and hence the user unnecessarily retries the operation in vain. As a result, the user becomes unhappy with usability of the biometric authentication apparatus.

### SUMMARY

In view of the above, it is an object to provide an authentication apparatus, an authentication program, and an authentication method, which are capable of providing some users who are considered to be unstable in biometric information to be acquired thereby with the same usability as provided to the other users as the majority of them.

According to an aspect, there is provided an authentication apparatus which includes a biometric information-acquiring unit for acquiring biometric information from a person to be authenticated; a determining unit for determining whether or not the person to be authenticated has uncertainty of verification; an information generating unit for generating first generated information for use in verification from the biometric information, and generating, when the person to be authenticated has uncertainty of verification, second generated information for use in verification from the biometric information in addition to the first generated information; a verification target-selecting unit for selecting whether to set first registration information which has been registered in advance for verification of the biometric information, as a verification target, or set second registration information which has been registered in advance for verification of the biometric information, as a verification target, in addition to the first registration information; and a verifying unit for verifying registration information selected as the verification target against corresponding generated information.

### BRIEF DESCRIPTION OF DRAWINGS

FIG. 1 illustrates an authentication apparatus according to a first embodiment;
FIG. 2 illustrates an authentication system according to a second embodiment;
FIG. 3 illustrates an example of the hardware configuration of the authentication apparatus according to the second embodiment;
FIG. 4 illustrates a sensor unit according to the second embodiment;
FIG. 5 illustrates a configuration of the authentication apparatus according to the second embodiment, for executing registration of biometric information as a registration apparatus;
FIGS. 6A and 6B illustrate examples of determination of uncertainty of authentication of a living body to be authenticated by the authentication apparatus according to the second embodiment;
FIG. 7 illustrates an example of extraction of additional information executed by the authentication apparatus according to the second embodiment;
FIG. 8 illustrates an example of a registration database generated by the authentication apparatus according to the second embodiment;
FIG. 9 illustrates an example of a biometric information list generated by the authentication apparatus according to the second embodiment;
FIGS. 10A and 10B illustrate examples of a variation of determination of uncertainty of authentication of a living body to be authenticated by the authentication apparatus according to the second embodiment;
FIGS. 11A and 11B illustrate examples of a variation of determination of uncertainty of authentication of a living body to be authenticated by the authentication apparatus according to the second embodiment;
FIG. 12 illustrates a configuration of the authentication apparatus according to the second embodiment, for executing 1:N verification of biometric information;
FIG. 13 illustrates a configuration of the authentication apparatus according to the second embodiment, for executing 1:1 verification of biometric information;
FIG. 14 illustrates a configuration of an authentication apparatus according to a third embodiment, for executing verification of biometric information;
FIG. 15 illustrates a configuration of an authentication apparatus according to a fourth embodiment, for executing verification of biometric information; and
FIG. 16 illustrates a configuration of an authentication apparatus according to a fifth embodiment, for executing verification of biometric information.

### DESCRIPTION OF EMBODIMENTS

Several embodiments will be described below with reference to the accompanying drawings, wherein like reference numerals refer to like elements throughout.

### (a) First Embodiment

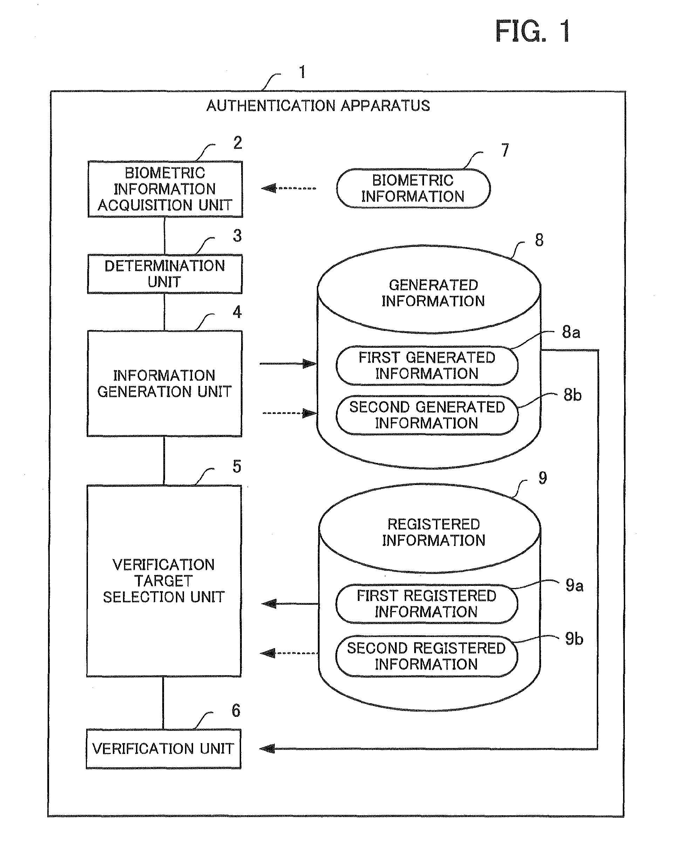

First, a description will be given of an authentication apparatus according to a first embodiment with reference to FIG. 1. FIG. 1 illustrates the authentication apparatus according to the first embodiment.

The authentication apparatus, denoted by reference numeral 1, performs person authentication using a living body. The authentication apparatus 1 further functions as a verification apparatus that verifies biometric information acquired from a person to be authenticated against biometric information (registered information) acquired from the person to be authenticated and registered in advance. The authentication apparatus 1 includes a biometric information acquisition unit 2, a determination unit 3, an information generation unit 4, a verification target selection unit 5, and a verification unit 6.

The biometric information acquisition unit 2 acquires biometric information 7 from a person to be authenticated. The determination unit 3 determines whether or not the person to be authenticated has uncertainty of verification, based on the biometric information 7 acquired by the biometric information acquisition unit 2. For example, the biometric information acquisition unit 2 acquires two, or three or more items of the biometric information 7, which are different in acquisition timing. The determination unit 3 compares the acquired two, or three or more items of the biometric information 7 to thereby determine whether or not the person to be authenticated has uncertainty of verification.

The information generation unit 4 generates generated information 8 used for verification from the biometric information 7. The information generation unit 4 generates first generated information 8a from the biometric information 7, and generates second generated information 8b from the biometric information 7, which is used for verification in addition to the generated information 8a in a case where it is determined by the determination unit 3 that the person to be authenticated has uncertainty of verification. The first generated information 8a is main generated information for use in verification, and the second generated information 8b is sub generated information additionally used for verification.

The verification target selection unit 5 sets registered information 9 registered in advance for verifying the biometric information 7 as a verification target. The verification target selection unit 5 selects first registered information 9a as a verification target, or second registered information 9b as a verification target in addition to the first registered information 9a. The first registered information 9a is main registered information for use in verification, and the second registered information 9b is sub registered information additionally used for verification.

The verification unit 6 verifies the registered information 9 selected as the verification target against the corresponding generated information 8. If the first registered information 9a is selected as the verification target, the verification unit 6 verifies the corresponding first generated information 8a against the first registered information 9a. Further, if the first registered information 9a and the second registered information 9b are selected as the verification targets, the verification unit 6 verifies the corresponding first generated information 8a and second generated information 8b, against the first registered information 9a and the second registered information 9b.

As a consequence, the authentication apparatus 1 performs verification on the person to be authenticated who has uncertainty, using not only the main information, but also the sub additional information, and hence it is possible to improve the verification rate, i.e. it is possible to improve the accuracy of authentication. Further, the authentication apparatus 1 performs verification on a person to be authenticated who has no uncertainty, using the main generated information of the generated information 8 and the main registered information of the registered information 9.

Therefore, the authentication apparatus 1 is capable of providing some persons to be authenticated who are considered to be unstable in the biometric information 7 to be acquired thereby with the same usability as provided to the other users as the majority of them.

### (b) Second Embodiment

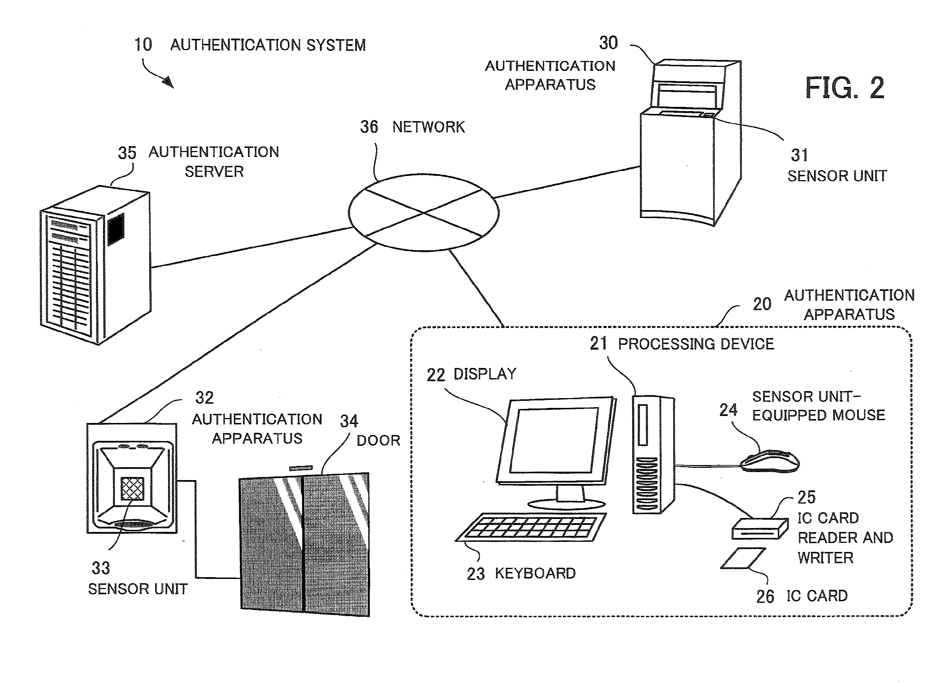

Next, a description will be given of an authentication system with reference to a second embodiment. FIG. 2 illustrates the authentication system according to the second embodiment. Although in the second embodiment, the authentication system, denoted by reference numeral 10, is illustrated as an authentication system that performs authentication of an individual, using veins of a palm, by way of example, this is not limitative, but it is applicable to a system which performs the authentication using another part of a living body for biometric feature detection.

The authentication system 10 identifies and authenticates an individual by recognizing a biometric feature, and can be used for log on to an information system or for entrance and exit management. The authentication system 10 includes an authentication apparatus 20, an authentication apparatus 30, an authentication apparatus 32, an authentication server 35, and a network 36.

The authentication apparatuses 20, 30, and 32 perform biometric authentication when authenticating a user. The authentication apparatus 20 is a computer for performing user authentication, and is e.g. a terminal apparatus for business use, which necessitates a high security level. The authentication apparatus 30 is an ATM (Automated Teller Machine) that is installed in a financial institution. The authentication apparatus 32 is a system for managing entrance and exit to and from a security area.

The authentication server 35 stores identification information for identifying users (persons to be authenticated) and biometric information (template) registered in advance for biometric authentication in a manner associated with each other. The identification information for identifying a user is unique ID (IDentification) information given to a user directly (e.g. a user number) or indirectly (e.g. a bank account number). The biometric information registered in advance includes feature information acquired by extracting a feature portion from image information, and encoded information acquired by encoding the image information or the feature information.

Further, the authentication server 35 is a database server of the authentication system 10, which includes various databases (e.g. a registration database and a biometric information list, described hereinafter). The network 36 connects the authentication apparatus 20, the authentication apparatus 30, the authentication apparatus 32, and the authentication server 35 by wired or wireless connection in a manner enabling communication between them. Note that the various databases may be provided in any of the authentication apparatus 20, the authentication apparatus 30, and the authentication apparatus 32, instead of the authentication server 35.

The authentication apparatus 20 comprises a processing device 21, a display 22, and a sensor unit-equipped mouse 24, and further comprises a keyboard 23, an IC (Integrated Circuit) card reader and writer 25, and so forth, as required. The sensor unit-equipped mouse 24 incorporates a sensor unit. The sensor unit, which includes an image pickup device, photographs an image of a palm of the user, and outputs the photographed image of veins to the processing device 21. The IC card reader and writer 25 reads and writes information of an IC card 26 of the user. The keyboard 23 and the sensor unit-equipped mouse 24 receive user input operations.

Now, a description will be given of palm vein authentication performed by the authentication apparatus 20. A user who requests authentication inputs identification information (e.g. user ID) for identifying the user using the keyboard 23 and the sensor unit-equipped mouse 24 or the IC card reader and writer 25. The authentication apparatus 20 guides the user to input biometric information, via a display using the display 22. The user holds a hand over the sensor unit-equipped mouse 24 to thereby input the biometric information. The authentication apparatus 20 having an image of the palm veins input therein as the biometric information verifies the input image of veins (biometric information) against the registered template. The registered template is stored in a storage section of the processing device 21, a storage section of the authentication server 35, or a storage section of the IC card 26 of the user. In this case, the authentication apparatus 20 functions as an authentication apparatus which performs verification (1:1 verification) of the biometric information input by the user against the biometric information identified according to the identification information.

Note that the authentication apparatus 20 may also perform verification which does not need an input of identification information for identifying a user from the keyboard 23, the sensor unit-equipped mouse 24, or the IC card reader and writer 25. In this case, the authentication apparatus 20 also functions as an authentication apparatus which verifies the biometric information input by the user against a plurality of biometric information items registered in advance (1:N verification).

The authentication apparatus 30 includes a sensor unit 31. The sensor unit 31 includes an image pickup device which photographs the palm of the user. The authentication apparatus 30 performs authentication of the user using the image of veins. The authentication apparatus 30 includes an IC card reader and writer, not illustrated, and performs verification using a registered template stored in an IC card (e.g. IC chip-equipped cash card). In this case, the authentication apparatus 30 functions as an authentication apparatus which performs 1:1 verification.

The authentication apparatus 32 includes a sensor unit 33. The sensor unit 33 includes an image pickup device, and photographs the palm of the user. The authentication apparatus 32 performs authentication of the user using the image of veins to control opening and closing of a door 34. In this case, the authentication apparatus 32 functions as an authentication apparatus which performs 1:N verification. The authentication apparatus 32 also functions as an authentication apparatus which performs 1:1 verification by including not only the sensor unit 33, but also an identification information input device, such as a numeric keyboard or an IC card reader and writer.

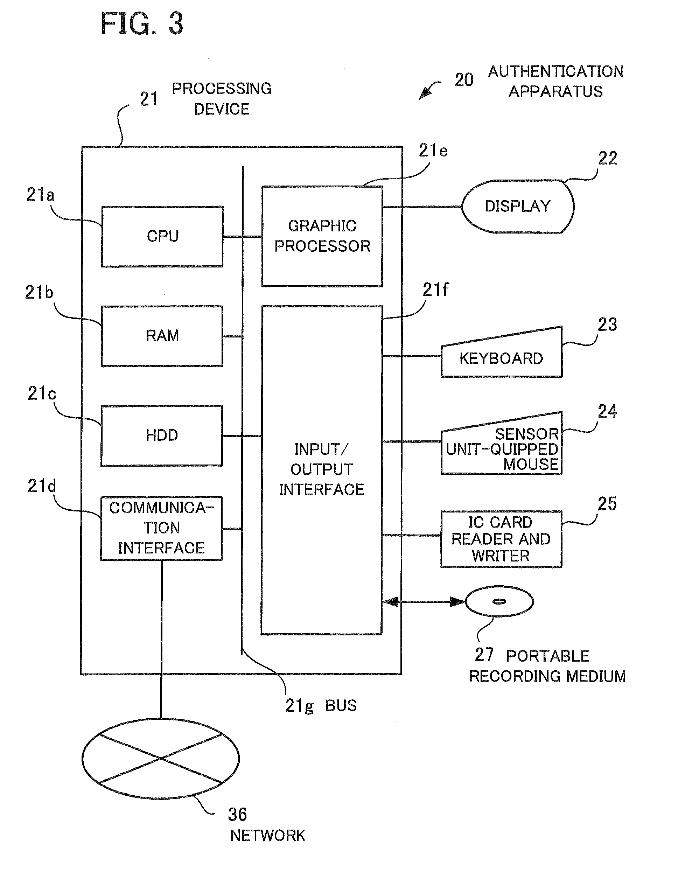

Next, an example of the hardware configuration of the authentication apparatus 20 according to the present embodiment will be described with reference to FIG. 3. FIG. 3 illustrates an example of the hardware configuration of the authentication apparatus according to the second embodiment.

The authentication apparatus 20 comprises the processing device 21, the display 22, the keyboard 23, the sensor unit-equipped mouse 24, and the IC card reader and writer 25.

The overall operation of the processing device 21 is controlled by one, or two or more CPUs (Central Processing Units) 21a. A RAM (Random Access Memory) 21b, an HDD (Hard Disk Drive) 21c, a communication interface 21d, a graphic processor 21e, and an input/output interface 21f are connected to the CPU 21a via a bus 21g.

The RAM 21b temporarily stores at least part of the program of an OS (Operating System) and application programs which the CPU 21a is caused to execute. Further, the RAM 21b stores various data required by the CPU 21a for processing. The HDD 21c stores the OS and the application programs.

The display 22 is connected to the graphic processor 21e. The graphic processor 21e displays images on the screen of the display 22 according to commands from the CPU 21a.

To the input/output interface 21f are connected the keyboard 23, the sensor unit-equipped mouse 24, and the IC card reader and writer 25. Further, the input/output interface 21f is configured to be connectable to a portable recording medium interface which is capable of writing information into a portable recording medium 27, and reading out information to the portable recording medium 27. The input/output interface 21f transmits signals sent from the keyboard 23, the sensor unit-equipped mouse 24, the IC card reader and writer 25, and the portable recording medium interface, to the CPU 21a via the bus 21g.

More specifically, the input/output interface 21f may be connected to the sensor unit-equipped mouse 24 by USB (Universal Serial Bus). The processing device 21 receives the image of veins from the sensor unit via a USB connection.

The communication interface 21d is connected to the network 36. The communication interface 21d transmits and receives data to and from the authentication server 35.

With the above-described hardware configuration, it is possible to realize the processing functions according to the present embodiment. Note that the authentication apparatus 30, the authentication apparatus 32, and the authentication server 35 as well are realized by the same hardware configuration.

Note that each processing device 21 may also be configured to include a module formed by an FPGA (Field Programmable Gate Array), a DSP (Digital Signal Processor), and so forth, and may also be configured without the CPU 21a. In this case, each processing device 21 is equipped with a nonvolatile memory (an EEPROM (Electrically Erasable and Programmable Read Only Memory), a flash memory, or a flash memory semiconductor device, for example), and stores a firmware of the module. The firmware can be written in the nonvolatile memory via the portable recording medium 27 or the communication interface 21d. Thus, the processing device 21 may also update the firmware by rewriting the firmware stored in the nonvolatile memory.

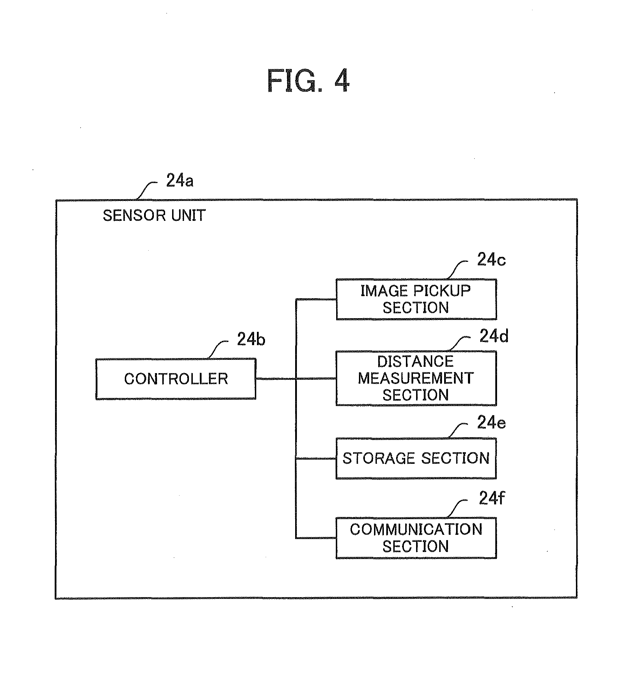

Next, with reference to FIG. 4, a description will be given of a configuration of the sensor unit-equipped mouse 24 for acquiring image information and distance information, and realizing output to the processing device 21. FIG. 4 illustrates a sensor unit according to the second embodiment. Note that the sensor unit 31 and the sensor unit 33 may have the same configuration as that of the sensor unit, denoted by reference numeral 24a.

The sensor unit 24a is incorporated in the sensor unit-equipped mouse 24. The sensor unit 24a includes a controller 24b, an image pickup section 24c, a distance measurement section 24d, a storage section 24e, and a communication section 24f.

The controller 24b controls the overall operation of the processing sections. The image pickup section 24c acquires image information from a living body as an object. The image pickup section 24c includes an image sensor which photographs a living body, e.g. a CMOS (Complementary Metal Oxide Semiconductor) sensor or a CCD (Charge Coupled Device) sensor, a condenser lens, and a plurality of near infrared ray-emitting devices (LEDs: Light Emitting Diodes) which irradiate the object with light. The near infrared ray-emitting devices are provided e.g. around the image sensor, for emitting near infrared rays toward the object (upward), and the image sensor picks up an image of the object irradiated with near infrared rays. The image sensor views a wide range of the palm as the object within an image pickup range through the condenser lens (wide-angle lens).

The distance measurement section 24d acquires information of a distance from a living body as the object. The sensor unit 24a photographs the palm existing within a predetermined distance by determining image pickup timing using a distance measurement sensor. Note that the image pickup section 24c may perform continuous photographing (e.g. 15 frames per second) in predetermined timing, and out of the thus photographed images of veins, may use one or a plurality of them, for determining whether or not the user has uncertainty of verification.

The storage section 24e stores image information acquired by the image pickup section 24c and distance information acquired by the distance measurement section 24d in a manner associated with each other. The communication section 24f is connected to the processing device 21, and receives instructions from the processing device 21, and transmits image information and distance information to the processing device 21.

An image photographed by the sensor unit 24a is an image acquired by irradiating near infrared rays onto the living body (palm) as the object and photographing reflected light from the palm. Since hemoglobin in red cells flowing through veins of the palm has lost oxygen, the hemoglobin (reduced hemoglobin) has the property of absorbing near infrared rays in the vicinity of 700 to 1000 nm. Therefore, when near infrared rays are irradiated onto the palm, there is little reflection of the near infrared rays only from a portion where the veins extend, whereby it is possible to recognize positions of the veins by the degree of the intensity of the reflected light of the near infrared rays. Although the use of a specific light source makes an image of veins easy to extract characteristic information therefrom, the image is an achromatic image.

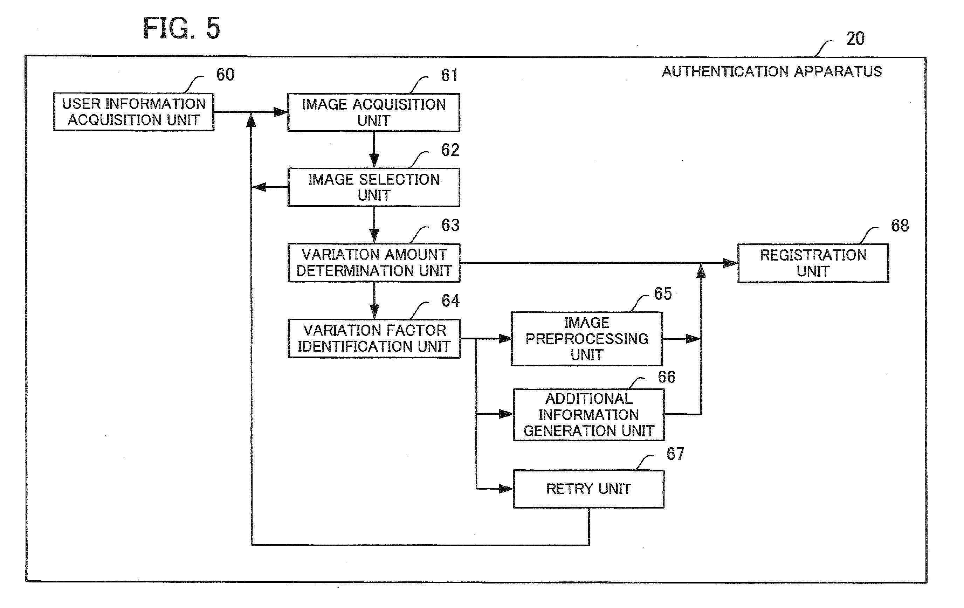

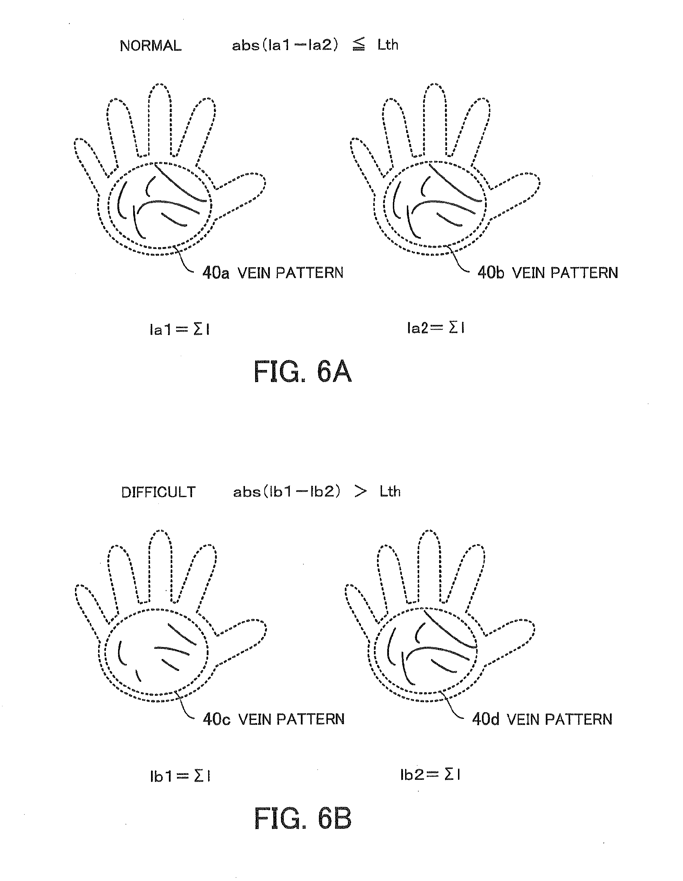

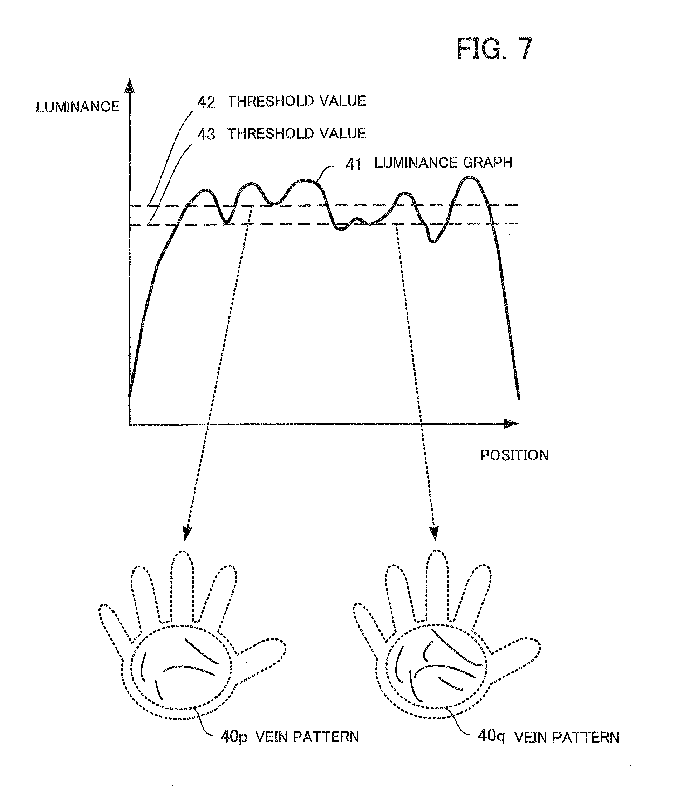

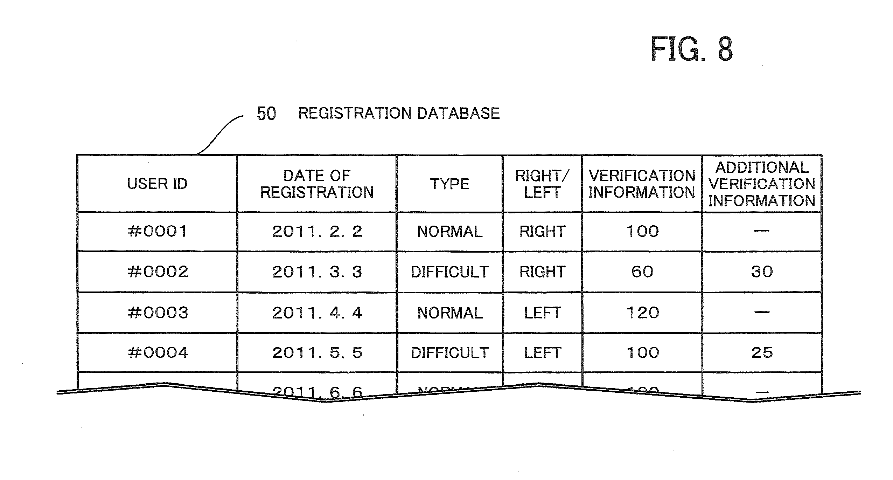

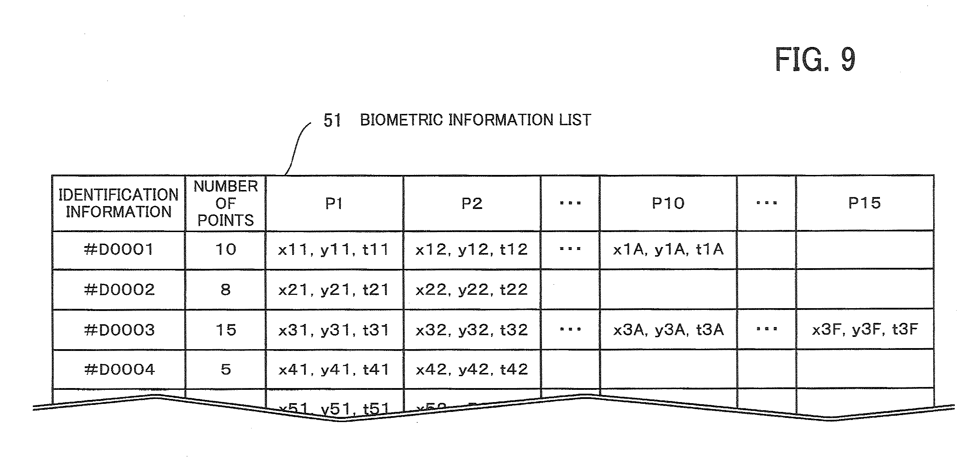

Next, a description will be given of a configuration of the authentication apparatus 20 for realizing registration processing for registering biometric information for use in authentication, in advance, with reference to FIGS. 5 to 9. FIG. 5 illustrates the configuration of the authentication apparatus according to the second embodiment, for executing registration of biometric information, as a registration apparatus. FIGS. 6A and 6B illustrate examples of determination of uncertainty of authentication of a living body to be authenticated by the authentication apparatus according to the second embodiment. FIG. 7 illustrates an example of extraction of additional information, executed by the authentication apparatus according to the second embodiment. FIG. 8 illustrates an example of a registration database generated by the authentication apparatus according to the second embodiment. FIG. 9 illustrates an example of a biometric information list generated by the authentication apparatus according to the second embodiment.

The authentication apparatus 20 includes a user information acquisition unit 60, an image acquisition unit 61, an image selection unit 62, a variation amount determination unit 63, a variation factor identification unit 64, an image preprocessing unit 65, an additional information generation unit 66, a retry unit 67, and a registration unit 68. These processing units are realized by the hardware configuration illustrated in FIG. 3.

The user information acquisition unit 60 acquires identification information of a user so as to associate the identification information with biometric information to be registered. If there is no need of identifying the user, information having no redundancy, such as a serial number, may be acquired. The user information acquisition unit 60 acquires user information input via the keyboard 23, the sensor unit-equipped mouse 24, or the IC card reader and writer 25.

To acquire biometric information for use in registration, the image acquisition unit 61 photographs a palm of the user to thereby acquire an image of palm veins. This enables the authentication apparatus 20 to acquire the image of palm veins of the user. Further, the image acquisition unit 61 photographs the palm a plurality of times, whereby the authentication apparatus 20 acquires a plurality of images of palm veins of the user, for use in determination of whether or not the biometric information of the user has uncertainty of verification. The image acquisition unit 61 photographs the palm of the user using the sensor unit-equipped mouse 24. For example, the sensor unit-equipped mouse 24 photographs a plurality of images of veins from a palm which the user holds over the image pickup section 24c, at image pickup timing differentiated by the holding-over operation.

The image selection unit 62 selects one from the plurality of images of veins acquired by the image acquisition unit 61, which is small in difference in variation between frames. The image acquisition unit 61 and the image selection unit 62 repeat the same operations for acquiring a plurality of images of veins and selecting one therefrom a plurality of times (e.g. twice) to thereby select a plurality of images of veins.

The variation amount determination unit 63 determines whether or not an amount of variation between the plurality of images of veins selected by the image selection unit 62 is within a range defined by a predetermined threshold value. At this time, the variation amount determination unit 63 sets a vein pattern existing in an area formed by clipping a palm part from the image of veins, as an object on which the amount of variation is to be evaluated.

Here, evaluation of the amount of variation performed on two vein patterns by the variation amount determination unit 63 will be described with reference to FIGS. 6A and 6B. Two vein patterns illustrated in FIG. 6A are determined by the variation amount determination unit 63 that a difference in variations is within a range of a threshold value, so that the biometric information of the user does not have uncertainty of verification, i.e. the biometric information can be normally handled.

The variation amount determination unit 63 separates veins forming a vein pattern 40a into respective units of veins, and calculates a sum la1 of respective lengths 1 of the veins. Further, the variation amount determination unit 63 separates veins forming a vein pattern 40b into respective units of veins, and calculates a sum la2 of respective lengths 1 of the veins. The variation amount determination unit 63 calculates a difference abs (la1 - la2) between the sum la1 of the vein pattern 40a and the sum la2 of the vein pattern 40b, and compares the calculated difference with a threshold value Lth. As a result, abs (la1 - la2) ≤ Lth is obtained, and hence it is determined that the user from who the vein pattern 40a and the vein pattern 40b were obtained does not have uncertainty of verification.

On the other hand, two vein patterns illustrated in FIG. 6B are determined by the variation amount determination unit 63 that a difference in variations is beyond the threshold value, and the biometric information of the user has uncertainty of verification, i.e. that it is difficult to authenticate the user if the biometric information is normally handled.

The variation amount determination unit 63 separates veins forming a vein pattern 40c into respective units of veins, and calculates a sum Ib1 of respective lengths 1 of the veins. Further, the variation amount determination unit 63 separates veins forming a vein pattern 40d into respective units of veins, and calculates a sum lb2 of respective lengths 1 of the veins. The variation amount determination unit 63 calculates a difference abs (lb1 - lb2) between the sum lb1 of the vein pattern 40c and the sum lb2 of the vein pattern 40d, and compares the calculated difference with the threshold value Lth. As a result, abs (lb1 - lb2) > Lth is obtained, and hence it is determined that the user from who the vein pattern 40c and the vein pattern 40d were obtained has uncertainty of verification.

If the biometric information of the user does not have uncertainty of verification, the processing proceeds from the variation amount determination unit 63 to the registration unit 68. On the other hand, if the biometric information of the user has uncertainty of verification, the processing proceeds from the variation amount determination unit 63 to the variation factor identification unit 64.

The variation factor identification unit 64 identifies a variation factor responsible for the determination that the biometric information of the user has uncertainty of verification. The variation factor identification unit 64 evaluates an external environment, and determines whether or not a change in the external environment is a variation factor. For example, when a change in brightness of the entire photographed image, or a change in brightness of the background of the palm is larger than a predetermined amount of change, the variation factor identification unit 64 determines that the change in the external environment is a variation factor. As a result, if it is determined that a change in external environments is a variation factor, the processing proceeds from the variation factor identification unit 64 to the retry unit 67.

Next, the variation factor identification unit 64 evaluates a posture of the palm, and determines whether or not the posture of the palm is a variation factor. For example, the variation factor identification unit 64 clips the palm from the entire photographed image, and evaluates the posture of the palm based on the size, shape, tilt of the palm. If the posture of the palm is not appropriate, the variation factor identification unit 64 determines that the posture of the palm is a variation factor. As a result, if it is determined that an inappropriate posture of the palm is a variation factor, the processing proceeds from the variation factor identification unit 64 to the image preprocessing unit 65.

If it is determined that neither the external environment nor the posture of the palm is a variation factor, the variation factor identification unit 64 determines that there is a problem specific to the user. As a result, the processing proceeds from the variation factor identification unit 64 to the additional information generation unit 66.

Note that the variation factor identification unit 64 may determine whether or not a change in the external environment is a variation factor based on information from various sensors, not illustrated, such as temperature, humidity, and illuminance. Further, even when it is determined that a change in the external environment is a variation factor, the processing may proceed from the variation factor identification unit 64 to the image preprocessing unit 65 if it is determined that the image is correctable. Further, even when it is determined that the posture of the palm is a variation factor, the processing may proceed from the variation factor identification unit 64 to the retry unit 67 if it is determined that the image is not correctable.

The image preprocessing unit 65 corrects the image of veins as a source of extraction of the vein pattern. The image preprocessing unit 65 corrects the image of veins by correcting the brightness and shape of the whole or part of the photographed image. For example, Image denoising, Image contrast adjustment, Image enhancement, Image Normalization and Image Restoration, etc.

The retry unit 67 provides a guide to the user, which prompts the user to retry the operation of holding a hand over the sensor unit-equipped mouse 24, in order to acquire the image of veins again by the image acquisition unit 61. The retry unit 67 provides the guide not only using the display on the display 22, but also using sound from a speaker, not illustrated. When providing the guide for retrying the operation, the retry unit 67 may instruct a method of correcting the posture of the palm to an appropriate one e.g. by displaying a message of "Please open your palm".

The additional information generation unit 66 generates biometric information for additional registration by the registration unit 68 in addition to biometric information for normal registration by the registration unit 68.

Here, generation of the biometric information for additional registration, executed by the additional information generation unit 66, will be described with reference to FIG. 7. A luminance graph 41 illustrated in FIG. 7 indicates distribution of luminance along one of scanning lines along which scanning is performed (e.g. a scanning line in a lateral direction of the palm) useful for explaining analysis of luminance on a surface of the palm of the user. A vein pattern 40p is generated by applying a threshold value 42 to the luminance graph 41. A vein pattern 40q is generated by applying a threshold value 43 to the luminance graph 41. The threshold value 43 is set so as to extract a larger amount of information from the image of veins than that extracted using the threshold value 42.

Therefore, the vein pattern 40q has a larger amount of information than the vein pattern 40p. If the vein pattern 40p is biometric information for normal registration, an amount of information on the vein pattern 40q increased from information on the vein pattern 40p corresponds to biometric information for additional registration. The additional information generation unit 66 extracts the biometric information within a needed range on the surface of the palm of the user to thereby generate a vein pattern of the palm.

Note that the generation of the biometric information for additional registration, executed by the additional information generation unit 66, is not limited to the method illustrated in FIG. 7, but may be performed in various known methods. For example, the additional information generation unit 66 is capable of performing correction for sharpening the luminance graph 41, or correction for biasing the luminance graph 41. Further, the additional information generation unit 66 is also capable of extracting high-frequency components with respect to the luminance distribution after fast Fourier transformation, and emphasizing the contrast after fast Fourier inverse transformation. Even if these processing operations are performed, the additional information generation unit 66 can generate information items different in the amount of information from respective images before and after correction.

Note that it is also possible to generate a vein pattern used by the variation amount determination unit 63 for determining the variation, in a similar manner.

If the variation amount determination unit 63 determines that the biometric information of the user does not have uncertainty of verification, the registration unit 68 registers the vein pattern as the biometric information for normal registration, for use in verification. On the other hand, if the variation amount determination unit 63 determines that the biometric information of the user has uncertainty of verification, the registration unit 68 registers the vein pattern including biometric information for additional registration, for use in verification, in addition to the biometric information for normal registration.

Here, information registered by the registration unit 68 will be described with reference to FIGS. 8 and 9. A registration database 50 illustrated in FIG. 8 stores information for use in verification of a plurality of users. The registration database 50 is held by the authentication server 35 and the processing device 21. When performing 1:1 verification, the registration database 50 may be configured to record only information for use in verification of one user. In this case, the registration database 50 may be configured to be held by the processing apparatus 21 or the IC card 26.

The registration database 50 records a user ID, a date of registration, a type, right/left, verification information, and additional verification information. The user ID is information for uniquely identifying a user. The date of registration is information of a date on which the verification information is registered. The registration database 50 may set an expiration date of the verification information based on the date of registration. The type is information indicative of whether or not the user has uncertainty of verification. The type is indicated as "difficult" when the user has uncertainty of verification, and as "normal" when the user does not have uncertainty of verification. The type is set at the time of registration, but may be updated according to the history of verification. For example, when uncertainty of verification of the user ceases to be confirmed, the registration unit 68 may change the type from "difficult" to "normal". The right/left is information indicative of distinction between the right palm and the left palm which is to be used for verification. The verification information indicates the number of veins forming the vein pattern as the biometric information for normal registration. The vein pattern is handled as a collection of one or more veins. The additional verification information indicates the number of veins forming a vein pattern as the biometric information for additional registration.

For example, the user ID "#0001" is registered such that the date of registration is February 2, 2011, the type is "normal", the right/left is "right", and the verification information has a vein pattern formed by 100 veins. The type of the user ID "#0001" is "normal", and hence registration of the additional registration information is blank. The user ID "#0002" is registered such that the date of registration is March 3, 2011, the type is "difficult", the right/left is "right", and the verification information has a vein pattern formed by 60 pieces of veins. The type of the user ID "#0002" is "difficult", and hence a vein pattern formed by 30 veins is registered as the additional verification information.

As described above, the registration database 50 records the additional verification information for a user whose type is "difficult", and dose not record the additional verification information for a user whose type is "normal", and hence the recording capacity for storing the registration database 50 is prevented from being too large.

The veins the number of which is recorded in the verification information and the additional verification information are recorded in detail on a vein-by-vein basis in a biometric information list 51, as illustrated in FIG. 9. The biometric information list 51 records identification information, the number of points, and a plurality of points which a vein passes (P1, P2, ..., and P20). The identification information is information for uniquely identifying each vein forming the vein pattern. The number of points is the number of points which the vein passes. A location of each point which the vein passes is indicated by an x coordinate and a y coordinate, and certainty of the coordinates is indicated by a certainty factor t. When the certainty factor is large, existence of the point is strongly affirmed, whereas when the certainty factor is small, existence of the point is weakly affirmed. Each of veins forming a vein pattern sequentially links to the points P1, P2, P3, and so on, in the mentioned order, which makes it possible to reproduce the approximate shape of the vein.

For example, the identification information "#D0001" is recorded such that the number of points is "10", and 10 points which a vein passes are P1 "x11, y11, t11", P2 "x12, y12, t12", ..., and P10 "x1A, y1A, t1A". Further, the identification information "#D0002" is recorded such that the number of points is "8", and 8 points which a vein passes are P1 "x21, y21, t21", P2 "x22, y22, t22", ..., and P8 "x28, y28, t28" (not illustrated).

Note that the biometric information list 51 may be configured to record e.g. a vector tracing each vein or a collection of dots, in place of the plurality of points which each vein passes (P1, P2, ..., and P20).

With the above-described configuration, the authentication apparatus 20 functions as a registration apparatus which is capable of registering biometric information for use in verification. The authentication apparatus 20 differentiates an information amount of biometric information for registration depending on uncertainty of verification of the user, which makes it possible to design the registration database 50 in a compact size while facilitating verification of the user having uncertainty of verification.

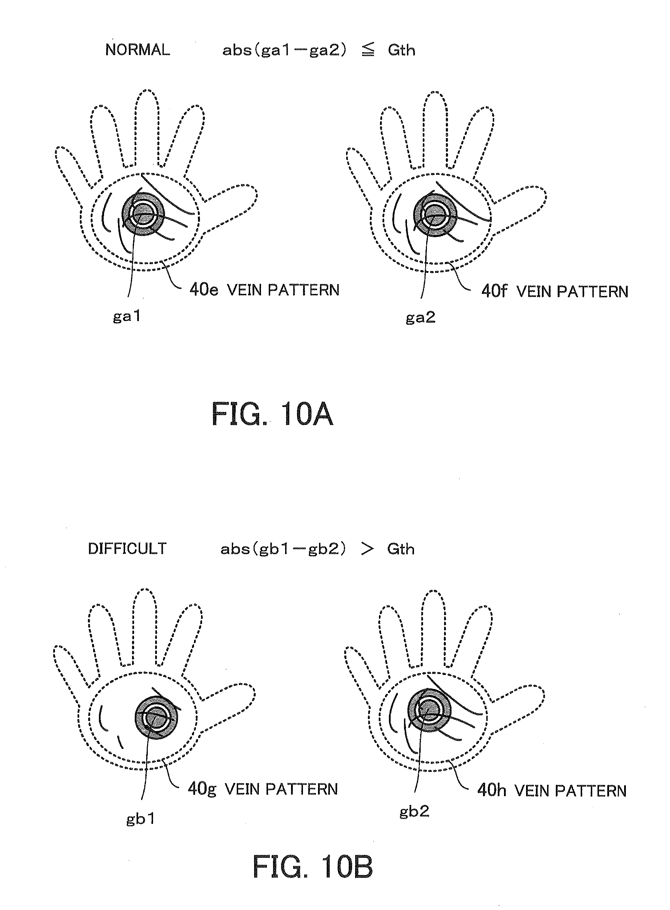

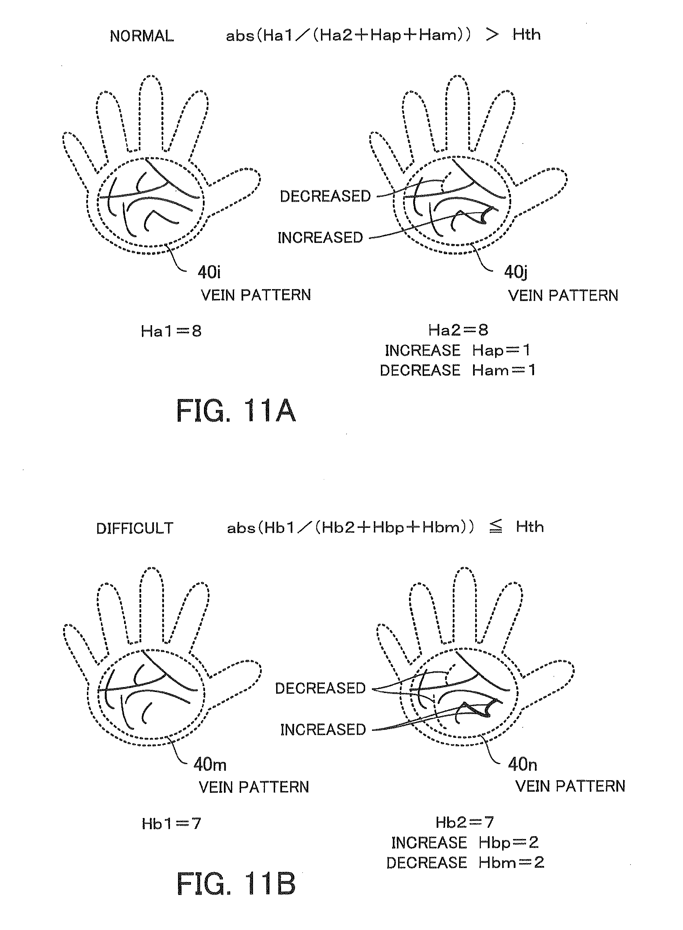

Next, a description will be given of examples of a variation of determination of uncertainty of authentication of a living body to be authenticated by the authentication apparatus according to the second embodiment with reference to FIGS. 10A, 10B, 11A, and 11B. FIGS. 10A and 10B, and 11A and 11B each illustrate an example of a variation of determination of uncertainty of authentication of a living body to be authenticated by the authentication apparatus according to the second embodiment.

FIGS. 10A and 10B illustrate a first variation. Two vein patterns illustrated in FIG. 10A are determined by the variation amount determination unit 63 that a difference in variations is within a range of a threshold value, so that the biometric information of the user does not have uncertainty of verification, i.e. the biometric information can be normally handled.

The variation amount determination unit 63 calculates a gravity center ga1 of veins forming a vein pattern 40e. Further, the variation amount determination unit 63 calculates a gravity center ga2 of veins forming a vein pattern 40f. The variation amount determination unit 63 calculates a distance abs (ga1 - ga2) between the gravity center ga1 of the vein pattern 40e and the gravity center ga2 of the vein pattern 40f, and compares the calculated distance with a threshold value Gth. As a result, abs (ga1 - ga2) ≤ Gth is obtained, and hence the variation amount determination unit 63 determines that the user from who the vein patterns 40e and 40f are obtained does not have uncertainty of verification.

On the other hand, two vein patterns illustrated in FIG. 10B are determined by the variation amount determination unit 63 that a difference in variations is beyond the threshold value, so that the biometric information of the user has uncertainty of verification, i.e. if the biometric information is normally handled, it is difficult to authenticate the user.

The variation amount determination unit 63 calculates a gravity center gb1 of veins forming a vein pattern 40g. Further, the variation amount determination unit 63 calculates a gravity center gb2 of veins forming a vein pattern 40h. The variation amount determination unit 63 calculates a distance abs (gb1 - gb2) between the gravity center gb1 of the vein pattern 40g and the gravity center gb2 of the vein pattern 40h, and compares the calculated distance with the threshold value Gth. As a result, abs (gb1 - gb2) > Gth is obtained, and hence the variation amount determination unit 63 determines that the user from who the vein patterns 40g and 40h are obtained has uncertainty of verification.

Note that calculation of the gravity center is performed in order to determine whether or not a difference in variations is within the range of the threshold value, so that calculation of the gravity center in a strict sense is not needed. Therefore, the variation amount determination unit 63 may calculate the gravity center using a known calculation method. For example, the variation amount determination unit 63 may set coordinates of a point a total of distances from which to all points which a plurality of veins pass (see FIG. 9) becomes minimum, as the gravity center.

FIGS. 11A and 11B illustrate the second variation. Two vein patterns illustrated in FIG. 11A are determined by the variation amount determination unit 63 that a difference in variations is within the range of the threshold value, so that the biometric information of the user does not have uncertainty of verification, i.e. the biometric information can be normally handled.

The variation amount determination unit 63 calculates a change amount Ha1 of veins forming a vein pattern 40i. Further, the variation amount determination unit 63 calculates a change amount Ha2 of veins forming a vein pattern 40j. At this time, the variation amount determination unit 63 sets a change amount in the vein pattern 40j as an increase from the vein pattern 40i to Hap, and sets a change amount in the vein pattern 40j as a decrease from the vein pattern 40i to Ham.

For example, the vein pattern 40j has one vein counted as the increase (illustrated by a thick line), and one vein counted as the decrease (illustrated by a broken line), and hence Hap = 1 and Ham = 1 are obtained. In the vein pattern 40i, Ha1 = 8 holds, and hence Ha2 = Ha1 + Hap - Ham = 8 + 1 -1 = 8 is obtained.

The variation amount determination unit 63 calculates a change ratio abs (Ha1/(Ha2 + Hap + Ham)) of the change amount Ha2 of the vein pattern 40j to the change amount Ha1 of the vein pattern 40i, and compares the obtained change ratio with a threshold value Hth. As a result, abs (Ha1/(Ha2 + Hap + Ham)) > Hth is obtained, and hence it is determined that the user from who the vein patterns 40i and 40j were obtained does not have uncertainty of verification.

On the other hand, two vein patterns illustrated in FIG. 11B are determined by the variation amount determination unit 63 that the difference in variation is beyond the threshold value, so that the biometric information of the user has uncertainty of verification, i.e. if the biometric information is normally handled, it is difficult to authenticate the user.

The variation amount determination unit 63 calculates a change amount Hb1 of veins forming a vein pattern 40m. Further, the variation amount determination unit 63 calculates a change amount Hb2 of veins forming a vein pattern 40n. At this time, the variation amount determination unit 63 sets a change amount in the vein pattern 40n as an increase from the vein pattern 40m to Hbp, and sets a change amount in the vein pattern 40n as a decrease from the vein pattern 40m to Hbm.

For example, the vein pattern 40n has two veins calculated as the increase, and two veins calculated as the decrease, and hence Hbp = 2 and Hbm = 2 are obtained. In the vein pattern 40m, Hb1 = 7 holds, and hence Hb2 = Hb1 + Hbp - Hbm = 7 + 2 - 2 = 7 is obtained.

The variation amount determination unit 63 calculates a change ratio abs (Hb1/(Hb2 + Hbp + Hbm)) of the change amount Hb2 of the vein pattern 40n to the change amount Hb1 of the vein pattern 40m, and compares the calculated change ratio with the threshold value Hth. As a result, abs (Hb1/(Hb2 + Hbp + Hbm)) ≤ Hth is obtained, and hence it is determined that the user from who the vein patterns 40m and 40n were obtained has uncertainty of verification.

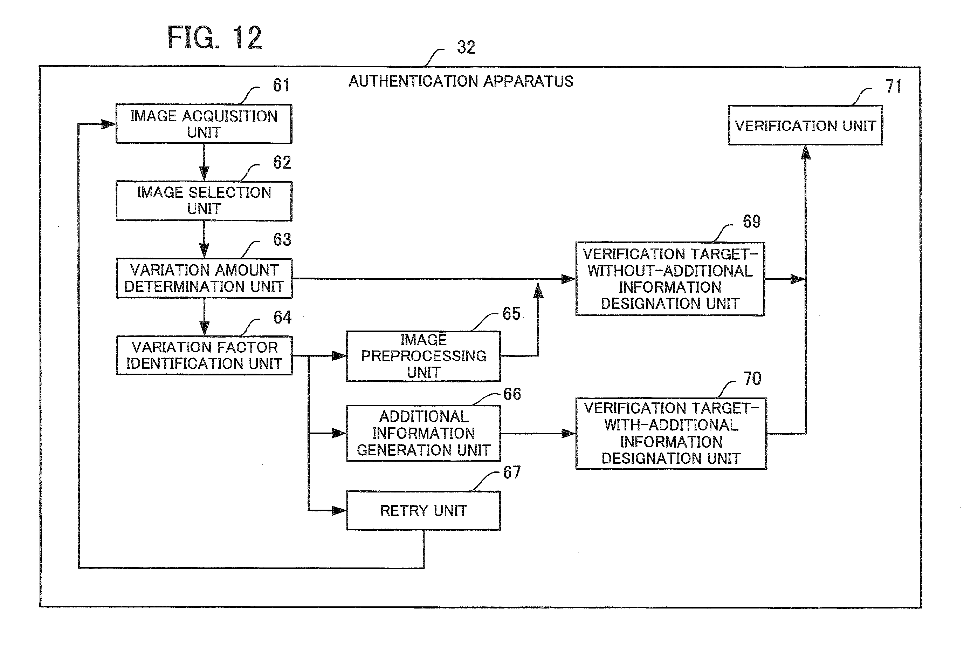

Next, a description will be given of a configuration of the authentication apparatus 32 for realizing 1:N verification executed during authentication, with reference to FIG. 12. FIG. 12 illustrates the configuration of the authentication apparatus according to the second embodiment, for executing 1:N verification of biometric information.

The authentication apparatus 32 includes the image acquisition unit 61, the image selection unit 62, the variation amount determination unit 63, the variation factor identification unit 64, the image preprocessing unit 65, the additional information generation unit 66, the retry unit 67, a verification target-without-additional information designation unit 69, a verification target-with-additional information designation unit 70, and a verification unit 71. These processing units are realized by the hardware configuration illustrated in FIG. 3. Note that description of the same configuration elements as those of the authentication apparatus 20 functioning as the registration apparatus are denoted by the same names and reference numerals, for simplification.

The authentication apparatus 32 executes 1:N verification without inputting user information. Therefore, there is no need of inputting user information e.g. from the IC card reader and writer 25 to the authentication apparatus 32.

The image acquisition unit 61 photographs a palm of the user, and acquires an image of palm veins to acquire biometric information for verification. The image selection unit 62 selects one from a plurality of images of veins acquired by the image acquisition unit 61, which is small in difference in variation between frames. The image acquisition unit 61 and the image selection unit 62 repeat the same operations for acquiring a plurality of images of veins and selecting one therefrom a plurality of times (e.g. twice) to thereby select a plurality of images of veins.

The variation amount determination unit 63 determines whether or not an amount of variation between the plurality of images of veins selected by the image selection unit 62 is within a range defined by a predetermined threshold value. If the biometric information of the user does not have uncertainty of verification, the processing proceeds from the variation amount determination unit 63 to the verification target-without-additional information designation unit 69. On the other hand, if the biometric information of the user has uncertainty of verification, the processing proceeds from the variation amount determination unit 63 to the verification target-with-additional information designation unit 70.

The variation factor identification unit 64 identifies a variation factor responsible for the determination that the biometric information of the user has uncertainty of verification. If it is determined that a change in the external environment is a variation factor, the processing proceeds from the variation factor identification unit 64 to the retry unit 67, whereas if it is determined that an inappropriate posture of the palm is a variation factor, the processing proceeds from the variation factor identification unit 64 to the image preprocessing unit 65. If it is determined that neither the external environment nor the posture of the palm is a variation factor, the variation factor identification unit 64 determines that there is a problem specific to the user, and the processing proceeds to the additional information generation unit 66.

The image preprocessing unit 65 corrects the image of veins as a source of extracting the vein pattern. The retry unit 67 provides a guide to the user, which prompts the user to retry the operation of holding a hand over the sensor unit-equipped mouse 24, in order to acquire the image of veins again by the image acquisition unit 61. The additional information generation unit 66 generates biometric information for additional verification by the verification unit 71 in addition to the biometric information for normal verification by the verification unit 71.

The verification target-without-additional information designation unit 69 designates verification information without additional information as a verification target. That is, the verification target-without-additional information designation unit 69 sets a user registered in the registration database 50 such that the additional verification information is blank and the type is "normal", as the verification target.

The verification target-with-additional information designation unit 70 designates the verification information with additional information as the verification target. That is, the verification target-with-additional information designation unit 70 sets a user registered in the registration database 50 such that the additional verification information is recorded and the type is "difficult", as the verification target.

The verification unit 71 executes 1:N verification on the user, as the verification target, who is designated by the verification target-without-additional information designation unit 69 or the verification target-with-additional information designation unit 70. That is, the verification unit 71 verifies the biometric information generated for normal verification against the verification information which the user designated by the verification target-without-additional information designation unit 69 has. Alternatively, the verification unit 71 verifies not only the biometric information generated for normal verification but also biometric information generated for additional verification against the verification information and the additional verification information which the user designated by the verification target-with-additional information designation unit 70 has.

As described above, the authentication apparatus 32 makes it possible to set a user registered as having uncertainty of verification of biometric information as a verification target, and hence it is possible to improve the success ratio of verification of users determined to have uncertainty of verification of biometric information. As a result, the authentication apparatus 32 improves usability for users who have conventionally repeatedly failed in verification.

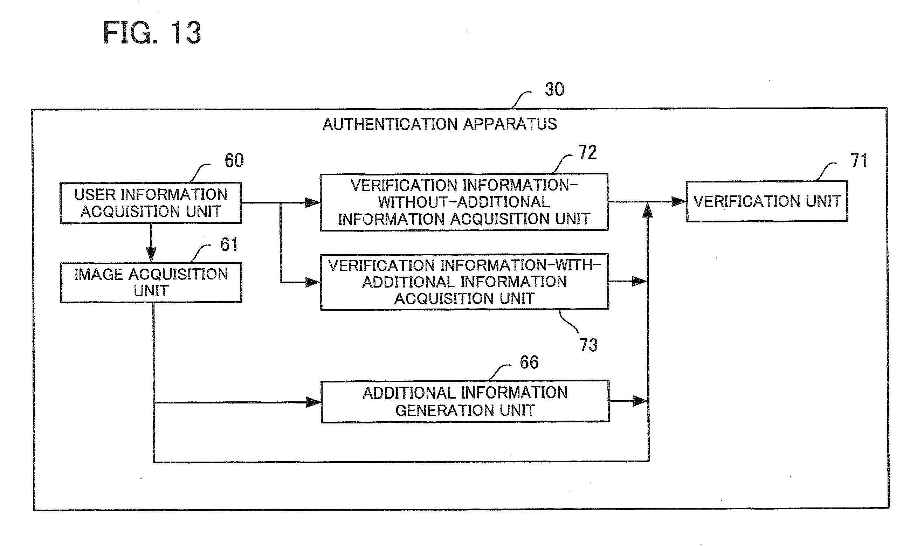

Next, a description will be given of a configuration of the authentication apparatus 30 for realizing 1:1 verification during authentication, with reference to FIG. 13. FIG. 13 illustrates the configuration of the authentication apparatus according to the second embodiment, for executing 1:1 verification of biometric information.

The authentication apparatus 30 includes the user information acquisition unit 60, the image acquisition unit 61, the additional information generation unit 66, a verification information-without-additional information acquisition unit 72, a verification information-with-additional information acquisition unit 73, and the verification unit 71. These processing units are realized by the hardware configuration illustrated in FIG. 3. Note that description of the same configuration elements as those of the authentication apparatus 20 functioning as the registration apparatus are denoted the same names and reference numerals, for simplification.

The user information acquisition unit 60 acquires identification information to identify a type of a user. For example, since the authentication apparatus 30 is the ATM, the identification information may be a bank account number, which can be read out from a magnetic stripe included in a cash card or a passbook by a MS (Magnetic Stripe) reader, not illustrated.

If the type acquired by the user information acquisition unit 60 is "normal", the verification information-without-additional information acquisition unit 72 acquires verification information without additional information from the registration database 50. If the type acquired by the user information acquisition unit 60 is "difficult", the verification information-with-additional information acquisition unit 73 acquires verification information with additional information from the registration database 50.

The image acquisition unit 61 photographs a palm of the user, and acquires an image of palm veins to acquire biometric information for use in verification. If the type acquired by the user information acquisition unit 60 is "normal", the processing proceeds from the image acquisition unit 61 to the verification unit 71. On the other hand, if the type acquired by the user information acquisition unit 60 is "difficult", the processing proceeds from the image acquisition unit 61 to the additional information generation unit 66. The additional information generation unit 66 generates biometric information for additional verification by the verification unit 71 in addition to the biometric information for normal verification by the verification unit 71.

The verification unit 71 executes 1:1 verification using the verification information, as a verification target, which is acquired by the verification information-without-additional information acquisition unit 72 or the verification information-with-additional information acquisition unit 73. That is, the verification unit 71 verifies the biometric information generated for normal verification against the verification information acquired by the verification information-without-additional information acquisition unit 72. Alternatively, the verification unit 71 verifies not only the biometric information generated for normal verification but also the biometric information generated for additional verification against the verification information and additional verification information acquired by the verification information-with-additional information acquisition unit 73.

As described above, the authentication apparatus 30 is capable of performing verification of a user registered to have uncertainty in verification of the biometric information, using the additional verification information registered because the user is determined to have uncertainty in verification of the biometric information. As a result, the authentication apparatus 30 makes it possible to improve the success ratio of verification of users having uncertainty in verification of biometric information. Therefore, the authentication apparatus 30 improves usability for users who have conventionally repeatedly failed in verification.

### (c) Third Embodiment

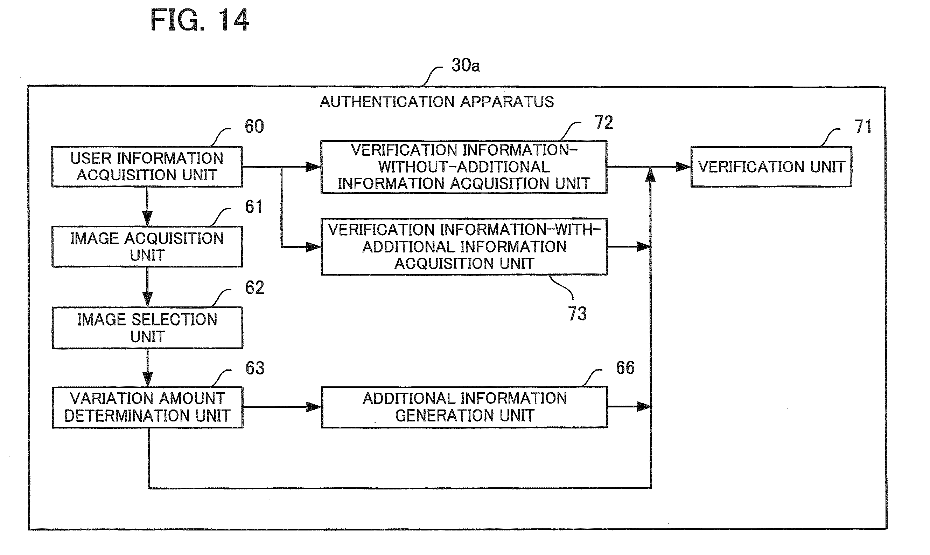

Next, a description will be given of an authentication apparatus according to a third embodiment with reference to FIG. 14. FIG. 14 illustrates a configuration of the authentication apparatus according to the third embodiment, for executing verification of biometric information. The authentication apparatus, denoted by reference numeral 30a, according to the third embodiment is the same as the authentication apparatus 30 according to the second embodiment in execution of 1:1 verification, but is different from the authentication apparatus 30 in that determination of whether or not to generate additional information is performed whenever verification is executed.

The authentication apparatus 30a includes the user information acquisition unit 60, the image acquisition unit 61, the image selection unit 62, the variation amount determination unit 63, the additional information generation unit 66, the verification information-without-additional information acquisition unit 72, the verification information-with-additional information acquisition unit 73, and the verification unit 71. These processing units are realized by the hardware configuration illustrated in FIG. 3. Note that description of the same configuration elements as those of the authentication apparatus 20 functioning as the registration apparatus are denoted by the same names and reference numerals, for simplification.

The user information acquisition unit 60 acquires identification information to identify the type of the user. If the type acquired by the user information acquisition unit 60 is "normal", the verification information-without-additional information acquisition unit 72 acquires verification information without additional information from the registration database 50. If the type acquired by the user information acquisition unit 60 is "difficult", the verification information-with-additional information acquisition unit 73 acquires verification information with additional information from the registration database 50.

The image acquisition unit 61 photographs a palm of the user, and acquires an image of palm veins to acquire biometric information for use in verification. The image selection unit 62 selects one from a plurality of images of veins acquired by the image acquisition unit 61, which is small in difference in variation between frames. The image acquisition unit 61 and the image selection unit 62 repeat the same operations for acquiring a plurality of images of veins and selecting one therefrom a plurality of times (e.g. twice) to thereby select a plurality of images of veins.

The variation amount determination unit 63 determines whether or not a variation between the plurality of images of veins selected by the image selection unit 62 is within a range defined by a predetermined threshold value. If the biometric information of the user does not have uncertainty of verification, the processing proceeds from the variation amount determination unit 63 to the verification unit 71. On the other hand, if the biometric information of the user has uncertainty of verification, the processing proceeds from the variation amount determination unit 63 to the additional information generation unit 66. The additional information generation unit 66 generates biometric information for additional verification by the verification unit 71 in addition to the biometric information for normal verification by the verification unit 71.

The verification unit 71 executes 1:1 verification on the verification information, as a verification target, which is acquired by the verification information-without-additional information acquisition unit 72 or the verification information-with-additional information acquisition unit 73. That is, the verification unit 71 verifies the biometric information generated for normal verification against the verification information acquired by the verification information-without-additional information acquisition unit 72. Alternatively, the verification unit 71 verifies not only the biometric information generated for normal verification but also the biometric information generated for additional verification against the verification information and the additional verification information acquired by the verification information-with-additional information acquisition unit 73.

As described above, the authentication apparatus 30a is capable of performing verification of a user determined to have uncertainty in verification of the biometric information, using the additional verification information registered because the user is determined to have uncertainty in verification of the biometric information. As a result, the authentication apparatus 30a makes it possible to improve the success ratio of verification of users having uncertainty in verification of biometric information. Therefore, the authentication apparatus 30a improves usability for users who have conventionally repeatedly failed in verification.

If the result of determination by the variation amount determination unit 63 and the type of the user acquired by the user information acquisition unit 60 are different, the authentication apparatus 30a may record a fact that information registered as the type in the registration database 50 has instability. The authentication apparatus 30a may update the information recorded as the type based on the record that the information of the type has instability. In this case, the authentication apparatus 30a may change the information recorded as the type from "difficult" to "normal". Alternatively, the authentication apparatus 30a may also reduce the expiration of the registered information based on the record that the information of the type has instability.

### (d) Fourth Embodiment

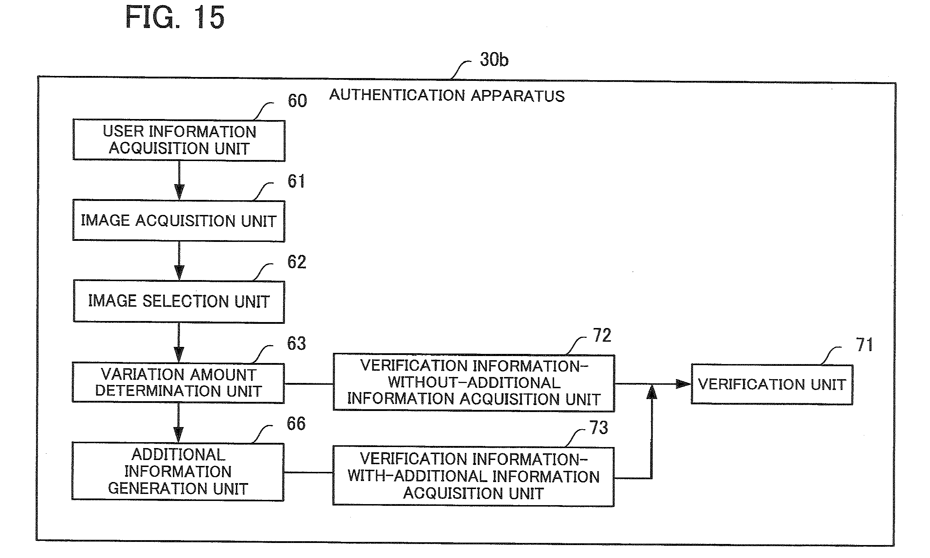

Next, a description will be given of an authentication apparatus according to a fourth embodiment with reference to FIG. 15. FIG. 15 illustrates a configuration of the authentication apparatus according to the fourth embodiment, for executing verification of biometric information. The authentication apparatus, denoted by reference numeral 30b, according to the fourth embodiment is the same as the authentication apparatus 30 according to the second embodiment in execution of 1:1 verification, but is different from the authentication apparatus 30 in that whether or not to cause additional verification information to be included in the verification information acquired from the registration database 50 is determined whenever verification is executed.

The authentication apparatus 30b includes the user information acquisition unit 60, the image acquisition unit 61, the image selection unit 62, the variation amount determination unit 63, the additional information generation unit 66, the verification information-without-additional information acquisition unit 72, the verification information-with-additional information acquisition unit 73, and the verification unit 71. These processing units are realized by the hardware configuration illustrated in FIG. 3. Note that description of the same configuration elements as those of the authentication apparatus 20 functioning as the registration apparatus are denoted by the same names and reference numerals, for simplification.

The user information acquisition unit 60 acquires identification information to identify a type of a user. The image acquisition unit 61 photographs a palm of the user, and acquires an image of palm veins to acquire biometric information for use in verification. The image selection unit 62 selects one from a plurality of images of veins acquired by the image acquisition unit 61, which is small in difference in variation between frames. The image acquisition unit 61 and the image selection unit 62 repeat the same operations for acquiring a plurality of images of veins and selecting one therefrom a plurality of times (e.g. twice) to thereby select a plurality of images of veins.

The variation amount determination unit 63 determines whether or not a variation between the plurality of images of veins selected by the image selection unit 62 is within a range defined by a predetermined threshold value. If the biometric information of the user does not have uncertainty of verification, the processing proceeds from the variation amount determination unit 63 to the verification information-without-additional information acquisition unit 72. On the other hand, if the biometric information of the user has uncertainty of verification, the processing proceeds from the variation amount determination unit 63 to the additional information generation unit 66.

The additional information generation unit 66 generates biometric information for additional verification by the verification unit 71 in addition to the biometric information for normal verification by the verification unit 71. The verification information-without-additional information acquisition unit 72 acquires verification information without additional information from the registration database 50. The verification information-with-additional information acquisition unit 73 acquires verification information with additional information from the registration database 50.

The verification unit 71 executes 1:1 verification on the verification information, as a verification target, which is acquired by the verification information-without-additional information acquisition unit 72 or the verification information-with-additional information acquisition unit 73. That is, the verification unit 71 verifies the biometric information generated for normal verification against the verification information acquired by the verification information-without-additional information acquisition unit 72. Alternatively, the verification unit 71 verifies not only the biometric information generated for normal verification but also the biometric information generated for additional verification against the verification information and the additional verification information acquired by the verification information-with-additional information acquisition unit 73.

Note that the authentication apparatus 30b may be configured such that if the result of determination by the variation amount determination unit 63 corresponds to the type of "difficult", and the type of the user recorded in the registration database 50 is "normal", the verification unit 71 performs determination of verification by discarding the additional information. Further, the authentication apparatus 30b may be configured such that if the result of determination by the variation amount determination unit 63 corresponds to the type of "normal", and the type of the user recorded in the registration database 50 is "difficult", the verification unit 71 performs determination of verification, by regarding the type of the user recorded in the registration database 50 as "normal".

As described above, the authentication apparatus 30b is capable of performing verification of a user determined to have uncertainty in verification of the biometric information, using the additional verification information registered because the user is determined to have uncertainty in verification of the biometric information. As a result, the authentication apparatus 30b makes it possible to improve the success ratio of verification of users having uncertainty in verification of biometric information. Therefore, the authentication apparatus 30b improves usability for users who have conventionally repeatedly failed in verification.

### (e) Fifth Embodiment

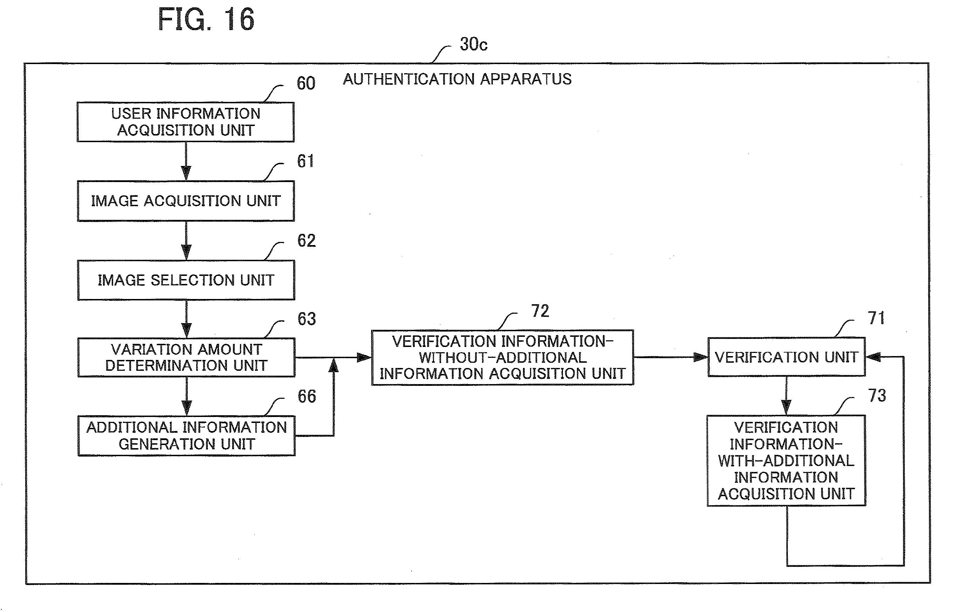

Next, a description will be given of an authentication apparatus according to a fifth embodiment with reference to FIG. 16. FIG. 16 illustrates a configuration of the authentication apparatus according to the fifth embodiment, for executing verification of biometric information.

The authentication apparatus, denoted by reference numeral 30c, includes the user information acquisition unit 60, the image acquisition unit 61, the image selection unit 62, the variation amount determination unit 63, the additional information generation unit 66, the verification information-without-additional information acquisition unit 72, the verification information-with-additional information acquisition unit 73, and the verification unit 71. These processing units are realized by the hardware configuration illustrated in FIG. 3. Note that description of the same configuration elements as those of the authentication apparatus 20 functioning as the registration apparatus are denoted by the same names and reference numerals, for simplification.

The user information acquisition unit 60 acquires identification information to identify a type of a user. The image acquisition unit 61 photographs a palm of the user, and acquires an image of palm veins to acquire biometric information for use in verification. The image selection unit 62 selects one from a plurality of images of veins acquired by the image acquisition unit 61, which is small in difference in variation between frames. The image acquisition unit 61 and the image selection unit 62 repeat the same operations for acquiring a plurality of images of veins and selecting one therefrom a plurality of times (e.g. twice) to thereby select a plurality of images of veins.

The variation amount determination unit 63 determines whether or not a variation between the plurality of images of veins selected by the image selection unit 62 is within a range defined by a predetermined threshold value. If the biometric information of the user does not have uncertainty of verification, the processing proceeds from the variation amount determination unit 63 to the verification information-without-additional information acquisition unit 72. On the other hand, if the biometric information of the user has uncertainty of verification, the processing proceeds the variation amount determination unit 63 to the additional information generation unit 66.

The additional information generation unit 66 generates biometric information for additional verification by the verification unit 71 in addition to the biometric information for normal verification by the verification unit 71. The verification information-without-additional information acquisition unit 72 acquires verification information without additional information from the registration database 50.

The verification unit 71, first, executes 1:1 verification on the verification information, as a verification target, which is acquired by the verification information-without-additional information acquisition unit 72. That is, the verification unit 71 verifies the biometric information generated for normal verification against the verification information acquired by the verification information-without-additional information acquisition unit 72.

Here, if the verification has failed, and the type of the user recorded in the registration database 50 is "difficult", the verification unit 71 verifies not only the biometric information generated for normal verification but also the biometric information generated for additional verification against the verification information and the additional verification information acquired by the verification information-with-additional information acquisition unit 73.

As described above, the authentication apparatus 30c is capable of performing verification of a user determined to have uncertainty in verification of the biometric information, using the additional verification information registered because the user is determined to have uncertainty in verification of the biometric information. As a result, the authentication apparatus 30c makes it possible to improve the success ratio of verification of users having uncertainty in verification of biometric information. Therefore, the authentication apparatus 30c improves usability for users who have conventionally repeatedly failed in verification.

Note that the processing functions of the above-described embodiments can be realized by a computer. In this case, there is provided a program describing the details of processing of the functions which the authentication apparatus 20, the authentication apparatus 30 (including the authentication apparatuses 30a, 30b, and 30c), the authentication apparatus 32, and the authentication server 35 are to have. By executing the program by the computer, the processing functions described above are realized on the computer. The program describing the details of processing can be recorded in a computer-readable storage medium (including a portable recording medium). Examples of the computer-readable recording medium include a magnetic recording device, an optical disk, a magneto-optical recording medium, and a semiconductor memory. Examples of the magnetic recording device include a hard disk drive (HDD), a flexible disk (FD), and a magnetic tape. Examples of the optical disk include a DVD (Digital Versatile Disk), a DVD-RAM, a CD-ROM, a CD-R (Reoordable)/RW (ReWritable). Examples of the magneto-optical recording medium include an MO (Magneto-Optical disc).

In case of distributing programs, for example, portable recording mediums, such as DVD, CD-ROM or the like in which the program is recorded are marketed. Further, it is also possible to store the program in a storage device of a server computer, and transfer the program from the server computer to the other computer via a network.

The computer which carries out the program stores, for example, the program which is recorded in the portable recording medium, or is transferred from the server computer in the storage device thereof. Then, the computer reads out the program from the storage device thereof, and carries out the processes according to the program. Note that the computer is also capable of directly reading out the program from the portable recording medium, and carrying out the processes according to the program. Further, the computer is also capable of carrying out the processes according to the program which is received, each time the program is transferred from the server computer.

Although in the above-described embodiments, the description has been given of the system which performs authentication using veins of a palm, by way of example, this is not limitative, but any other part of a living body for biometric feature detection may be used. For example, the part of a living body for biometric feature detection may be e.g. a sole, fingers of a hand and a foot, the back of a hand, an instep, a wrist, or an arm.

Note that when veins are used for authentication, a part of a living body for biometric feature detection is only necessitated to be a part on which veins can be viewed.

If a part of a living body for biometric feature detection is a part which can identify a body part for acquisition of biometric information, it is advantageous for authentication. For example, if the part of a living body is e.g. a palm or a face, it is possible to identify the part from an acquired image.

Note that the biometric information used for authentication is not limited to veins, but may be any other object, such as a fingerprint or a palm print.

According to the above-described authentication apparatus, the authentication program, and the authentication method, it is possible to provide the same usability to some users who are considered to be unstable in biometric information to be acquired as that provided to the other users as the majority of them.

## Claims

1. An authentication apparatus comprising:
biometric information-acquiring means for acquiring biometric information from a person to be authenticated;
determining means for determining whether or not the person to be authenticated has uncertainty of verification;
information generating means for generating first generated information for use in verification from the biometric information, and generating, when the person to be authenticated has uncertainty of verification, second generated information for use in verification from the biometric information in addition to the first generated information;
verification target-selecting means for selecting whether to set first registration information which has been registered in advance for verification of the biometric information, as a verification target, or set second registration information which has been registered in advance for verification of the biometric information, as a verification target, in addition to the first registration information; and
verifying means for verifying registration information selected as the verification target against corresponding generated information.

2. The authentication apparatus according to claim 1, wherein the information generating means generates the second generated information based on a result of determination by the determining means that the person to be authenticated has uncertainty of verification, and
wherein the verification target-selecting means selects to set the second registration information as the verification target in addition to the first registration information based on a result of determination by the determining means that the person to be authenticated has uncertainty of verification.

3. The authentication apparatus according to claim 1, wherein the information generating means generates the second generated information based on a result of determination by the determining means that the person to be authenticated has uncertainty of verification, and
wherein the verification target-selecting means selects to set the second registration information as the verification target in addition to the first registration information based on information indicative of uncertainty of verification of the person to be authenticated, which has been registered in advance.

4. The authentication apparatus according to claim 3, wherein the information indicative of uncertainty of verification of the person to be authenticated is updatable based on a result of determination by the determining means that the person to be authenticated has uncertainty of verification.

5. The authentication apparatus according to claim 1, wherein the determining means determines the uncertainty of verification of the person to be authenticated based on the biometric information acquired by the biometric information-acquiring means during authentication.

6. The authentication apparatus according to claim 1, wherein the determining means determines whether or not the person to be authenticated has the uncertainty by comparing two or more items of the biometric information which are different in acquisition timing.

7. The authentication apparatus according to claim 1, wherein the determining means determines whether or not the person to be authenticated has the uncertainty by comparing two or more items of feature information extracted in different manners from one item of the acquired biometric information.

8. The authentication apparatus according to claim 1, wherein the determining means determines whether or not the person to be authenticated has the uncertainty based on uncertainty information indicative of whether or not the person to be authenticated has the uncertainty, which has been registered in advance.

9. A computer program causing a computer to perform a procedure comprising:
acquiring biometric information from a person to be authenticated;
determining whether or not the person to be authenticated has uncertainty of verification;
generating first generated information for use in verification from the biometric information, and generating, when the person to be authenticated has uncertainty of verification, second generated information for use in verification from the biometric information in addition to the first generated information;
selecting whether to set first registration information which has been registered in advance for verification of the biometric information, as a verification target, or set second registration information which has been registered in advance for verification of the biometric information, as a verification target, in addition to the first registration information; and
verifying registration information selected as the verification target against corresponding generated information.

10. An authentication method executed by a computer, comprising:
acquiring biometric information from a person to be authenticated;
determining whether or not the person to be authenticated has uncertainty of verification;
generating first generated information for use in verification from the biometric information, and generating, when the person to be authenticated has uncertainty of verification, second generated information for use in verification from the biometric information in addition to the first generated information;
selecting whether to set first registration information which has been registered in advance for verification of the biometric information, as a verification target, or set second registration information which has been registered in advance for verification of the biometric information, as a verification target, in addition to the first registration information; and
verifying registration information selected as the verification target against corresponding generated information.
